# EUROPÄISCHE PATENTSCHRIFT

(11) **EP 3 495 903 B1**
(45) Veröffentlichungstag und Bekanntmachung des Hinweises auf die Patenterteilung: **26.02.2020**
(21) Anmeldenummer: 17205492.6
(22) Anmeldetag: 05.12.2017
(51) Int. Cl.: G05B 23/02

(54) **VERFAHREN ZUM BEDIENEN UND BEOBACHTEN EINER ZU STEUERNDEN TECHNISCHEN ANLAGE SOWIE OPERATOR-SYSTEM**
METHOD FOR OPERATING AND OBSERVING A SYSTEM TO BE CONTROLLED BY A TECHNICAL INSTALLATION AND OPERATOR SYSTEM
PROCÉDÉ DE COMMANDE ET DE SURVEILLANCE D'UNE INSTALLATION TECHNIQUE À COMMANDER AINSI QUE SYSTÈME D'EXPLOITATION

(43) Veröffentlichungstag der Anmeldung: 12.06.2019
(73) Patentinhaber: Siemens Aktiengesellschaft, 80333 München (DE)
(72) Erfinder: Lutz, Benjamin, 76327 Pfinztal (DE)

(56) Entgegenhaltungen:
- EP-A1- 2 124 114
- EP-A1- 2 808 749
- US-A1- 2005 027 377

## Beschreibung

Die Erfindung betrifft ein Verfahren zum Bedienen und Beobachten einer zu steuernden technischen Anlage gemäß dem Oberbegriff des Anspruchs 1. Die Erfindung betrifft ferner ein Operator-System gemäß dem Oberbegriff des Anspruchs 4 zur Durchführung des Verfahrens.

In der Prozessleittechnik sind gewöhnlich hunderte von Anlagenbildern und mehrere tausend Prozessobjekte zu bearbeiten, wobei ein Prozessobjekt mehrere zusammengehörige Facetten aufweist. Beispielsweise umfasst ein Prozessabbild eines Servers eines Operator-Systems zu diesen Prozessobjekten gehörige Prozessabbild-Bausteine bzw. bedien- und beobachtungsrelevante Prozessdaten dieser Prozessobjekte, ein Automatisierungsgerät zu den Prozessobjekten gehörige Automatisierungsbausteine bzw. Steuerbausteine (CFCs, SFCs, ...) und ferner ein User-Interface eines Clients des Operator-Systems zu den Prozessobjekten gehörige Blocksymbole eines Anlagenbildes sowie so genannte Faceplates, wobei die Anlagenbilder, die jeweils grafische Bildsymbole sowie die Blocksymbole der Prozessobjekte umfassen, zur Prozessbeobachtung und die Faceplates zur Prozessführung bzw. Prozessbedienung vorgesehen sind.

Die Prozessobjekte einer zu steuernden technischen Anlage, z. B. Prozessobjekte in Form von Messstellen, Tanks, Ventile, Sensoren, Aktuatoren, ..., sowie so genannte Continuous Function Charts (CFCs) und Sequential Function Charts (SFCs) werden gewöhnlich in einer so genannten Equipment-Hierarchie (EQH) strukturiert, wobei ein Anwender diese Equipment-Hierarchie zunächst mittels einer geeigneten Software eines Engineering-Systems erstellt. Anschließend wird die derart erstellte Equipment-Hierarchie mittels des Engineering-Systems kompiliert und zumindest in einen Operator-Server eines Operator-Systems eines Prozessleitsystems geladen (Compile & Download), wobei zur Laufzeit der Operator-Systeme und der Automatisierungsgeräte bzw. zur Laufzeit des Prozessleitsystems die Equipment-Hierarchie als zentrale Anlaufstelle z. B. für einen Batchprozess oder zur Navigation bzw. zur Ermittlung eines Prozessobjektes innerhalb der Equipment-Hierarchie genutzt wird. Die Equipment-Hierarchie weist neben Knoten, die Anlagenbilder repräsentieren, weitere Knoten auf, welche die Prozessobjekte repräsentieren. Ein Operator kann einerseits durch Selektion bzw. durch Anklicken eines Anlagenbild-Knotens das entsprechende Anlagenbild zur Darstellung auf einer Anzeigeeinheit öffnen, und anderseits durch Selektion bzw. durch Anklicken eines Prozessobjekt-Knotens ein diesem Prozessobjekt zugehöriges Faceplate öffnen, wodurch der Operator das Prozessobjekt und somit die Anlage bedienen kann. Dieses Faceplate kann auch in der Art und Weise geöffnet werden, indem der Operator ein zu diesem Prozessobjekt gehöriges Blocksymbol im Anlagenbild selektiert bzw. anklickt.

Um ein sicheres und effizientes Bedienen und Beobachten einer verfahrenstechnischen Anlage zu bewerkstelligen, ist ein für einen Operator führendes und assistierendes Alarmmanagement von Bedeutung. Bei auftretenden Alarmen, insbesondere bei einem so genannten Alarmschwall, ist es für den Operator im Rahmen der Prozessführung wünschenswert, mit wenigen Eingaben bzw. "Klicks", die jeweiligen Ursachen zu finden, Vorgehensweisen für die Behebung der Alarme abzuleiten und Alarme ohne "Umwege" zu beheben. Insbesondere bei der Behebung von mehreren Alarmen in Folge ist es wichtig, dass der Operator nicht bei jedem Alarm dasselbe "Prozedere" von der Auswahl des zu behebenden Alarms, dessen Lokalisierung und Einordnung und dessen Behebung wiederholen muss.

Aus dem Siemens-Katalog "ST PCS 7", Kapitel 7, Ausgabe 2017 sind so genannte Meldefolgeanzeigen bekannt, mittels denen zwar Meldungen, z. B. Diagnose-, Warn- und/oder Alarmmeldungen, nach unterschiedlichen Attributen für eine Behandlung tabellenhaft sortiert werden können, allerdings geht durch diese tabellenartige Darstellung die zu Grunde liegende Anlagenstruktur für eine Folgeevaluierung verloren und zur Behebung beispielsweise jeder Alarmmeldung bzw. jeden Alarms muss erst noch zum alarmgebenden Prozessobjekt navigiert werden.

Der US 2005/027377 liegt eine Problemstellung ähnlich derjenigen der Erfindung zugrunde (siehe Abs. [0012]). Die Schrift zeigt eine Zugriffssteuerung (zusammengefasst in Abs. [0150]) ohne besonderen Bezug zu graphischen Repräsentationen von Anlagenteilen.

Der Erfindung liegt daher die Aufgabe zugrunde, ein Verfahren der eingangs genannten Art anzugeben, mittels dessen insbesondere bei Prozessstörungen die Bedienung und Beobachtung einer zu steuernden technischen Anlage vereinfacht wird. Darüber hinaus ist ein Operator-System gemäß dem Oberbegriff des Anspruchs 4 zu schaffen, welches zur Durchführung des Verfahrens geeignet ist.

Diese Aufgabe wird im Hinblick auf das Verfahren durch die im kennzeichnenden Teil des Anspruchs 1 angegebenen, bezüglich des Operator-Systems durch die im kennzeichnenden Teil des Anspruchs 4 angegebenen Maßnahmen gelöst.

Vorteilhaft ist, dass strukturierte, personalisierte und zur Laufzeit dynamisch zusammengestellte Blocksymbole von Anlagenbildern erzeugt werden, welche beispielsweise eine effizient geführte und assistierte Behandlung von Alarmmeldungen durch einen Operator ermöglichen. Darüber hinaus wird durch eine dynamisch aktualisierte Darstellung von alarmgebenden Prozessobjekten gemäß einer Equipment-Hierarchie eine Evaluierung von Alarmschwallverursachern ermöglicht.

In einer Ausgestaltung der Erfindung gemäß den im Anspruch 2 angegebenen Maßnahmen kann der Operator die Lage bzw. Gefahrensituation bezüglich der verfahrenstechnischen Anlage besser einschätzen, indem die Anzahl der dargestellten Blocksymbole der Anlagenbilder "schrumpft" oder "wächst". Beispielsweise weist eine wachsende Anzahl auf steigende Störungen und somit auf viele zu behandelnde Prozessobjekte, eine schrumpfende Anzahl weist dagegen auf wenige Störungen und somit auf wenige zu behandelnde Prozessobjekte hin. Für den Fall, dass keine Blocksymbole mehr angezeigt werden, sind für den Operator keine aktiven Meldungen, Alarme bzw. Alarmmeldungen von Prozessobjekten mehr vorhanden, die er gemäß seinen Zugriffrechten behandeln müsste. Durch eine derartige dynamische Darstellung der Blocksymbole in Anlagenbildern ist die Quantität von Alarmen unmittelbar für den zugriffsberechtigten Operator "erfassbar", wobei auch die Tendenz hin zu weniger oder mehr Alarmen unmittelbar durch Schrumpfen oder Wachsen der Anzahl der dargestellten Blocksymbole der Anlagenbilder wahrgenommen werden kann.

In einer weiteren Ausgestaltung der Erfindung werden zusätzlich zu den dargestellten Blocksymbolen weitere Symbole im Anlagenbild, z. B. Symbole in Form von horizontalen und/oder vertikalen Pfeilen, dargestellt, die auf ausgeblendete Blocksymbole hinweisen. Dadurch wird dem Operator die "Kompression" der Blocksymbole angezeigt.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen in einer vereinfachten Form:
- Figur 1: Bestandteile eines Prozessleitsystems,
- Figur 2: eine Equipment-Hierarchie und
- Figur 3 bis 5: Blocksymbole eines Anlagenbildes.

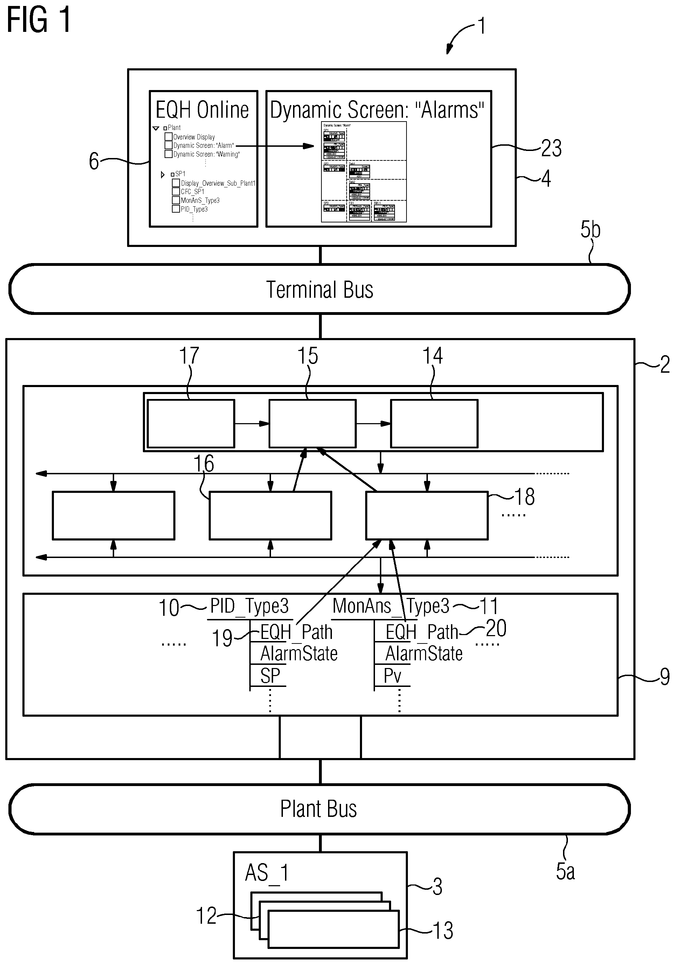

Die in den Figuren 1 bis 5 dargestellten gleichen Teile sind mit gleichen Bezugszeichen versehen.

In Figur 1 sind mit 1 Bestandteile eines Prozessleitsystems bezeichnet, die im vorliegenden Ausführungsbeispiel einen Operator-Server 2, ein Automatisierungsgerät 3 und einen Operator-Client 4 umfassen. Das Prozessleitsystem kann selbstverständlich eine Vielzahl von Automatisierungsgeräten aufweisen, die einerseits über einen Plant Bus 5a mit dem Operator-Server 2 und andererseits über einen weiteren hier nicht dargestellten Bus mit dezentralen Peripherien verbunden sind, an welche eine Vielzahl von Feldgeräten (Sensoren, Aktuatoren) angeschlossen sind. Im vorliegenden Beispiel sind lediglich ein Operator-Client 4 und ein Operator-Server 2 dargestellt. Selbstverständlich können ferner weitere Operator-Server und weitere OS-Clients vorgesehen sein, wobei gewöhnlich jeweils ein Operator-Server und ein über einen so genannten Terminal Bus 5b mit diesem Server verbundener Operator-Client ein Operator-System bzw. eine Operator-Station bilden.

Der Operator-Client 4 ist zur Darstellung einer Equipment-Hierarchie und von Anlagenbildern vorgesehen, wobei - wie erläutert - eine Equipment-Hierarchie neben Knoten, welche die Anlagenbilder repräsentieren, weitere Knoten aufweist, welche die Prozessobjekte repräsentieren. Ein Operator kann einerseits durch Selektion bzw. durch Anklicken eines Anlagenbild-Knotens das entsprechende Anlagenbild zur Darstellung auf einer Anzeigeeinheit öffnen, und anderseits durch Selektion bzw. durch Anklicken eines Prozessobjekt-Knotens ein diesem Prozessobjekt zugehöriges Faceplate öffnen, wodurch der Operator das Prozessobjekt und somit die Anlage bedienen kann. Dieses Faceplate kann ferner dadurch geöffnet werden, indem der Operator ein zu diesem Prozessobjekt gehöriges Blocksymbol im Anlagenbild selektiert bzw. anklickt.

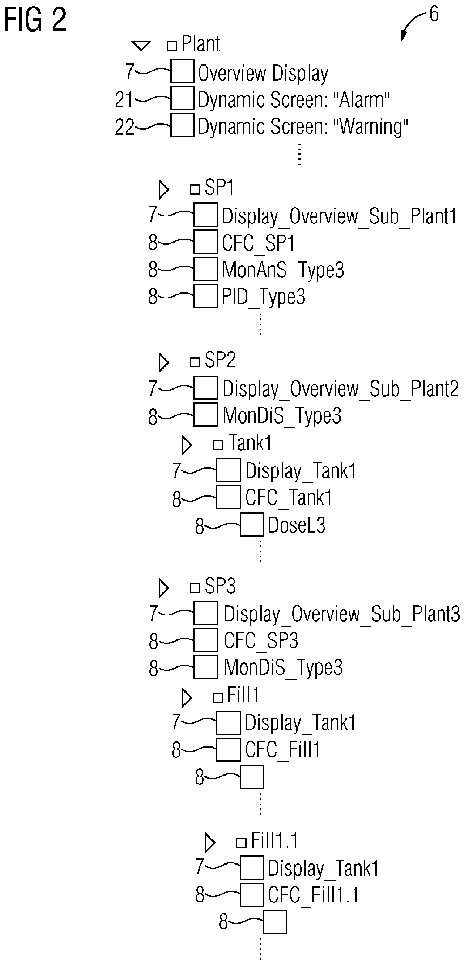

Im Folgenden wird auf Figur 2 verwiesen, in welcher eine Equipment-Hierarchie (EQH) 6 dargestellt ist. Diese Equipment-Hierarchie 6 erstellt ein Anwender mittels einer geeigneten Software eines hier nicht dargestellten Engineering-Systems des Prozessleitsystems, wobei die Equipment-Hierarchie 6 eine technologische Sicht einer zu steuernden technischen Anlage (Plant) repräsentiert. In dieser Equipment-Hierarchie 6 sind strukturiert gemäß einer Baumstruktur Knoten 7, 8 eingetragen bzw. hinterlegt, von denen die Knoten 7 Anlagenbilder, z. B. "Display_Overwie_Sub_Plant1" oder "Dipslay_Tank1", und die Knoten 8 CFC-Pläne und Prozessobjekte, beispielsweise Prozessobjekte in Form von Überwachungs- und Reglerobjekten ("MonAns-Type3", "PID_Type3" ...), repräsentieren.

Mittels der durch das Engineering-System erstellten und nach der Kompilierung in das Operator-System geladenen Equipment-Hierarchie 6 kann das jeweilige Anlagenbild online, d. h. während der Prozesssteuerung - geöffnet werden. Dazu selektiert ein Operator z. B. mittels einer "Maus" jeweils den entsprechenden Anlagenbild-Knoten 6 der auf dem Operator-Client 4 dargestellten Equipment-Hierarchie 6, wodurch das dem selektierten Anlagen-Knoten zugehörige Anlagenbild geöffnet und auf dem Operator-Client 4 dargestellt wird. Ein derartiges Anlagenbild enthält gewöhnlich grafische Bildsymbole, beispielsweise für Tanks, Behälter, Ventile, Rohre, ..., sowie zu Prozessobjekten gehörige Block-Symbole, wobei die Block-Symbole zur Prozessbeobachtung vorgesehen sind, um aktuelle Prozesswerte und Parameter während der Prozesssteuerung anzuzeigen.

Im Hinblick auf eine Prozessführung kann der Operator die Prozessobjekte - beispielsweise durch Ändern des Sollwerts und/oder weiteren Parameter - beeinflussen, indem er zunächst die angezeigten Block-Symbole im Anlagenbild selektiert bzw. "anklickt". Für den Fall, dass der Operator ein Blocksymbol selektiert, öffnet sich ein zu diesem Block-Symbol gehöriges, zur Prozessführung vorgesehenes, hier nicht dargestelltes Faceplate eines Prozessobjektes. Dieses Faceplate wird auf dem Operator-Client 4 dargestellt, wobei das Faceplate entsprechende Felder zum Eingeben, Ändern und/oder Löschen von Parametern des Prozessobjektes aufweist.

Es wird darauf hingewiesen, dass unter dem Begriff "Prozessobjekt" die jeweiligen Facetten eines Prozessobjektes verstanden werden, die im Operator-System 2, 4, in einem Prozessabbild 9 des Operator-Servers 2 und im Automatisierungsgerät 3 hinterlegt sind. So weist das Prozessabbild 9 des Operator-Servers 2 z. B. zu Prozessobjekten gehörige Prozessabbild-Bausteine 10, 11, das Automatisierungsgerät 4 zu diesen Prozessobjekten gehörige Automatisierungsbausteine 12, 13 und ferner ein Interface 14 des Operator-Systems zu diesem Prozessobjekten gehörige Faceplates und Blocksymbole auf.

Um die Bedienung und Beobachtung einer zu steuernden technischen Anlage zu vereinfachen und um verfahrenstechnisch strukturierte, personalisierte und zur Laufzeit dynamisch zusammengestellte Anlagenbilder oder Teile von Anlagenbildern von eine Meldung erzeugenden Prozessobjekten bereitstellen zu können, weist der Operator-Server 2 (Figur 1) eine (Software-)Komponente 15 auf, die dazu ausgebildet ist, einen Meldespeicher 16 auszulesen, in welchem die von den Automatisierungs-Bausteinen dem Operator-Server 2 übermittelten Meldungen hinterlegt sind. Aufgrund dieser Information erkennt die Komponente 15, welche Prozessobjekte eine Meldung erzeugten bzw. verursachten, beispielsweise eine Meldung in Form einer Alarm-, Warnung- oder Diagnosemeldung.

Ferner ist die Komponente 15 dazu ausgebildet, einen Zugriffsspeicher 17 auszulesen, in welchem hinterlegt ist, auf welche Prozessobjekte der Equipment-Hierarchie 6 ein an dem Operator-System 2, 4 angemeldeter Operator lesend und/oder schreibend zugreifen darf. Diese Zugriffrechte werden gewöhnlich während einer Projektierungsphase mittels des Engineering-Systems in den Zugriffsspeicher 17 eingetragen. Mittels der Informationen, welche Prozessobjekte eine Meldung erzeugen und auf welche Prozessobjekte ein angemeldeter Operator zugreifen darf, ermittelt die Komponente 15, auf welche der eine Meldung erzeugenden Prozessobjekte der angemeldete Operator in der Equipment-Hierarchie 6 lesend und/oder schreibend zugreifen darf.

Darüber hinaus ist die Komponente 15 dazu ausgebildet, aus einem Datenspeicher 18 Pfadangaben 19, 20 auszulesen, die vom Prozessabbild 9 in den Datenspeicher 18 übertragen werden. Die Pfadangaben 19, 20 beschreiben jeweils den Pfad eines eine Meldung erzeugenden Prozessobjektes innerhalb der technologischen Struktur der Equipment-Hierarchie 6, wobei im vorliegenden Ausführungsbeispiel angenommen wird, dass diese Prozessobjekte als PID-Regler und als Überwachungs-Baustein ausgebildet sind.

Dadurch, dass die Komponente aufgrund der Pfadangaben den Pfad dieser Prozessobjekte innerhalb der Equipment-Hierarchie kennt und darüber ermittelt bzw. geprüft hat, ob der angemeldete Operator auf diese Prozessobjekte überhaupt zugreifen darf, ist die Komponente dazu vorbereitet, bedarfsorientiert und dynamisch ein verfahrenstechnisch strukturiertes, für den Operatoren personalisiertes Anlagenbild mit den Blocksymbolen der eine Meldung erzeugenden Prozessobjekte zu erstellen. Unter bedarfsorientiert ist zu verstehen, dass die Blocksymbole eines Anlagenbildes erst erstellt und aktualisiert werden, falls der angemeldete und zugriffsberechtigte Operator zur Laufzeit einen Meldeknoten 21, 22 in der Equipment-Hierarchie 6 selektiert bzw. anwählt, wodurch diese Blocksymbole auf dem Operator-Client 4 dargestellt werden.

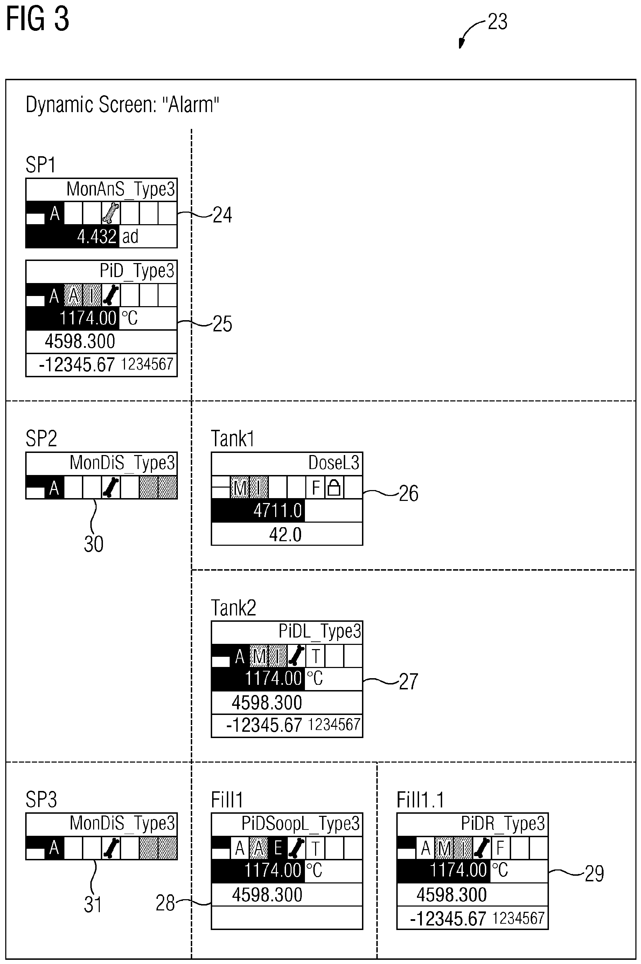

Für den Fall, dass der angemeldete Operator die Prozessobjekte beobachten und bedienen möchte, die eine Meldung in Form eines Alarms erzeugten, selektiert der Operator den Meldeknoten 21 ("Dynamic Screen: "Alarm"") in der Equipment-Hierarchie 6 (Figur 2). Die verfahrenstechnische Strukturierung wird - wie beschrieben - aus den Pfadangaben der alarmgebenden (Alarm-Meldung erzeugenden) Prozessobjekte abgeleitet und entspricht der in der Figur 2 dargestellten technologischen Hierarchie zur Laufzeit (EQH Online). In einem dynamischen Anlagenbild 23 (Figur 3) werden dann zur Laufzeit nur die Block-Symbole 24 bis 31 der Prozessobjekte angezeigt, die alarmgebend sind und die durch die Zugriffsrechte des Operators von diesem Operator auch behandelt werden dürfen.

Für den Fall, dass nun durch den Operator die alarmgebenden Prozessobjekte bedient werden, indem der Operator die dazugehörigen Blocksymbole zunächst selektiert und anschließend sich öffnende zugehörige Faceplates bearbeitet, stellt die Komponente 15 das Anlagenbild 23 neu zusammen, indem die Komponente 15 nach der Bedienung die "bedienten" Blocksymbole im Anlagenbild 23 ausblendet.

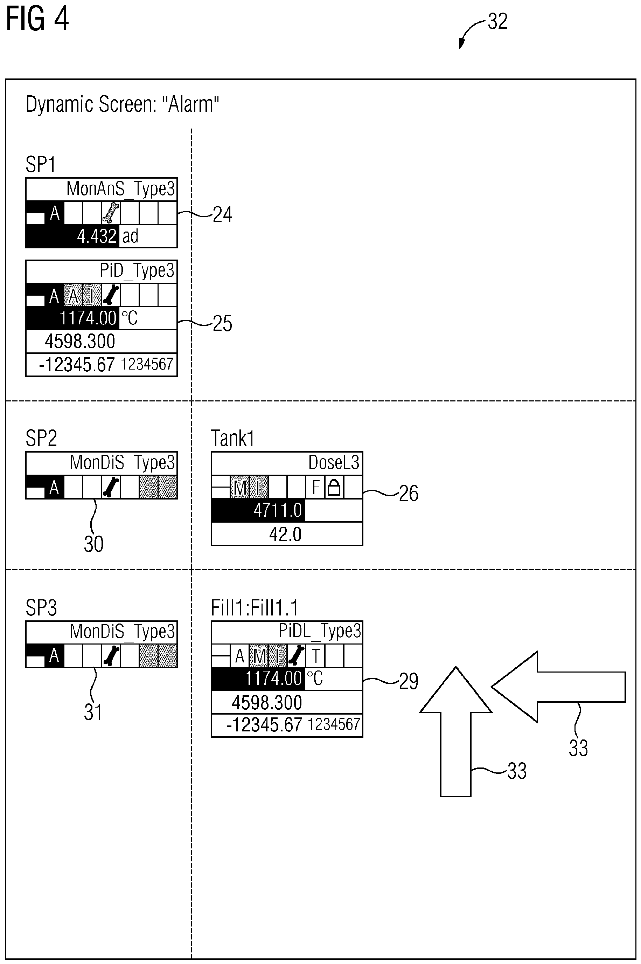

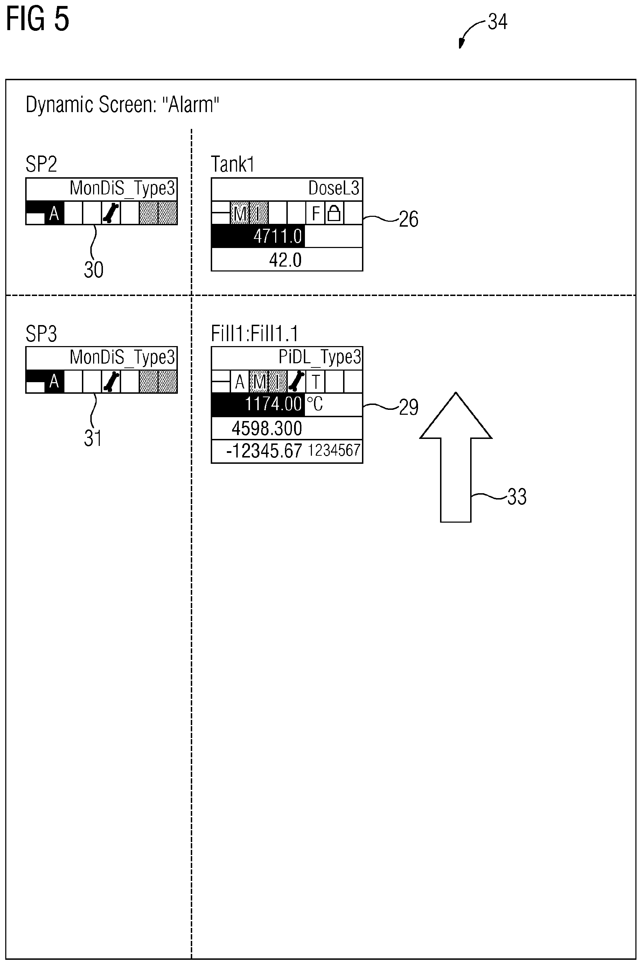

Werden beispielsweise die Alarme der dargestellten Blocksymbole 27, 28 ("PIDL_Type3" aus "Tank2" und ""PICStopL_Type3" aus "Fill1") der alarmgebenden Prozessobjekte behandelt, so stellt die Komponente 15 das Anlagenbild zur Laufzeit unmittelbar neu zusammen und erzeugt ein "komprimiertes" Anlagenbild 32 (Figur 4). Ferner erzeugt die Komponente 15 weitere Symbole in Form von horizontalen und vertikalen Pfeilen 33, die auf die ausgeblendeten Blocksymbole 27, 28 hinweisen. Durch eine derartige Komprimierung werden die EQH-Pfade entsprechend konkateniert, der Pfad des Prozessobjektes bzw. der Messstelle "Fill1.1" wird unter der technischen Einrichtung "Fill1" zu "Fill1.Fill1.1" konkateniert, so dass zum jeweiligen Prozessobjekt durch die Komprimierung der "EQH-Pfad" keine Lücken aufweist, was störend bezüglich der Lokalisierung des Prozessobjekts sein könnte. Durch die Komprimierung rücken alle Blocksymbole "zusammen", so dass eine effiziente Alarmbehandlung unterstützt wird, ohne dass der Operator dazu einen Bildwechsel vollziehen muss. Werden nun weitere Alarme der Prozessobjekte behandelt - beispielsweise alle Alarme aus der Teilanlage "SP1" (Sub Plant 1), wird das Anlagenbild weiterhin zur Laufzeit dynamisch komprimiert (Figur 5). Die Komprimierung des Anlagenbildes bewirkt, dass die Blocksymbole 24, 25 ausgeblendet und ein komprimiertes Anlagenbild 34 dargestellt wird.

Weist ein dargestelltes Anlagenbild keine Blocksymbole mehr auf, so weist dies darauf hin, dass für den Operator gemäß seinen Zugriffsrechten keine weiteren aktiven Alarme von Prozessobjekten mehr vorhanden sind, die er behandeln müsste.

Durch eine derartige dynamische Darstellung im Anlagenbild, ist die Quantität der Alarme unmittelbar "erfassbar". Auch die Tendenz hin zu weniger und mehr Alarmen kann unmittelbar durch Schrumpfen oder Wachsen des Anlagenbildes wahrgenommen werden. Vorteilhaft dieser dynamischen Darstellung von aktiven Alarmen ist, dass der Operator auf Grundlage der visuell strukturierten Darstellung angelehnt an die Equipment-Hierarchie Zusammenhänge zwischen Prozessobjekten und Alarmen erkennen und eine Strategie zur Alarmbehandlung entwickeln kann. Aufgrund der Verkettung von Prozessobjekten wird gewöhnlich von einem dieser Prozessobjekte als Verursacher ein Schwall von Alarmen ausgelöst. Durch diese beschriebene dynamische und strukturierte Darstellung ist es dem Operator möglich, die Quelle eines Alarmschwalls zu erkennen und zu behandeln. Oftmals ist ein hochpriorer Alarm nicht auch die unmittelbare Ursache für einen Alarmschwall, so dass dessen Behebung auch nicht zur Behebung des Alarmschwalls beiträgt. Mittels der beschriebenen Maßnahmen wird die Möglichkeit geschaffen, die Ursache eines Alarmschwalls rasch zu erkennen.

## Patentansprüche

1. Verfahren zum Bedienen und Beobachten einer zu steuernden technischen Anlage, wobei
- in einen Operator-Server (2) des Operator-Systems (2, 4) Zugriffsberechtigungen hinterlegt werden, die beschreiben, auf welche Prozessobjekte ein an diesem Operator-System (2, 4) angemeldeter Operator lesend und/oder schreibend zugreifen darf,
- in den Operator-Server (2) ein Prozessabbild (9) hinterlegt wird, das zu den Prozessobjekten gehörige Prozessabbild-Bausteine (10, 11) aufweist,
- in den Operator-Server (2) zu den Prozessobjekten gehörige Block-Symbole (24 bis 31) von Anlagenbildern sowie zu den Prozessobjekten gehörige Faceplates hinterlegt werden,
- zum Öffnen des jeweiligen Anlagenbildes zur Darstellung auf einem Operator-Client (4) des Operator-Systems (2, 4) in einer Equipment-Hierarchie (6) für das jeweilige Anlagenbild ein durch einen Operator selektierbarer Knoten (7) eingetragen wird,
- in ein Automatisierungsgerät (3) zu den Prozessobjekten gehörige Automatisierungs-Bausteine (12, 13) hinterlegt werden, wobei zur Laufzeit des Automatisierungsgerätes (3) die Automatisierungs-Bausteine dem Operator-Server (2) Meldungen übermitteln,
**dadurch gekennzeichnet, dass** für den Fall, dass dem Operator-Server (2) Meldungen übermittelt werden,
- anhand der Meldungen ermittelt wird, welche der Prozessobjekte Meldungen erzeugen,
- anhand der hinterlegten Zugriffsberechtigungen ermittelt wird, ob der an dem Operator-System (2, 4) angemeldete Operator berechtigt ist, auf diese Meldungen erzeugende Prozessobjekte zuzugreifen,
- in den jeweiligen Prozessabbild-Bausteinen (10, 11) eine Pfadangabe (19, 20) ausgelesen wird, die jeweils den Pfad des eine Meldung erzeugenden Prozessobjektes in der Equipment-Hierarchie (6) beschreibt, und
- für den Fall, dass der angemeldete Operator berechtigt ist, die Meldungen erzeugende Prozessobjekte zu bedienen, und für den Fall, dass ein Melde-Knoten (21, 22) in der Equipment-Hierarchie (6) durch den angemeldeten Operator selektiert wird, die Blocksymbole der die Meldung erzeugenden Prozessobjekte dargestellt werden.

2. Verfahren nach Anspruch 1, **dadurch gekennzeichnet, dass** für den Fall, dass das dargestellte Blocksymbol (27, 28) der jeweiligen eine Meldung erzeugenden Prozessobjekte durch den Operator selektiert wird, das zu diesem Blocksymbol gehörige Faceplate zum Bedienen des Prozessobjektes geöffnet wird, wobei nach der Bedienung das Faceplate und das Blocksymbol (27, 28) ausgeblendet wird.

3. Verfahren nach Anspruch 2, **dadurch gekennzeichnet, dass** zusätzlich zu den dargestellten Blocksymbolen weitere Symbole (33) dargestellt werden, die auf ausgeblendete Blocksymbole (27, 28) hinweisen.

4. Operator-System für ein Prozessleitsystem, wobei
- in einem Operator-Server (2) des Operator-Systems (2, 4) Zugriffsberechtigungen hinterlegt sind, die beschreiben, auf welche Prozessobjekte ein an diesem Operator-System (2, 4) angemeldeter Operator lesend und/oder schreibend zugreifen darf,
- in dem Operator-Server (2) ein Prozessabbild (9) hinterlegt ist, das zu den Prozessobjekten gehörige Prozessabbild-Bausteine (10, 11) aufweist,
- in den Operator-Server (2) zu den Prozessobjekten gehörige Block-Symbole (24 bis 31) von Anlagenbildern sowie zu den Prozessobjekten gehörige Faceplates hinterlegt sind,
- zum Öffnen des jeweiligen Anlagenbildes zur Darstellung auf einem Operator-Client (4) des Operator-Systems (2, 4) in einer Equipment-Hierarchie (6) für das jeweilige Anlagenbild ein durch einen Operator selektierbarer Knoten (7) eingetragen ist,
- der Operator-Server dazu ausgebildet ist, von einem Automatisierungsgerät (3), in welchem zu den Prozessobjekten gehörige Automatisierungs-Bausteine (12, 13) hinterlegt sind, zur Laufzeit des Automatisierungsgerätes (3) von den Automatisierungs-Bausteinen (12, 13) Meldungen zu empfangen,
**dadurch gekennzeichnet, dass** das Operator-System (4) dazu ausgebildet ist, für den Fall, dass von dem Operator-Server (2) Meldungen empfangen werden,
- anhand der Meldungen zu ermitteln, welche der jeweiligen Prozessobjekte eine Meldung erzeugen,
- anhand der hinterlegten Zugriffsberechtigungen zu ermitteln, ob der an dem Operator-System (2, 4) angemeldete Operator berechtigt ist, auf diese Meldungen erzeugende Prozessobjekte zuzugreifen,
- in den jeweiligen Prozessabbild-Bausteinen (10, 11) eine Pfadangabe (19, 20) auszulesen, die jeweils den Pfad des eine Meldung erzeugenden Prozessobjektes in der Equipment-Hierarchie (6) beschreibt,
- für den Fall, dass der angemeldete Operator berechtigt ist, die die Meldung erzeugenden Prozessobjekte zu bedienen, und für den Fall, dass der angemeldete Operator einen Melde-Knoten (21, 22) in der Equipment-Hierarchie (6) selektiert, die Blocksymbole der die Meldung erzeugenden Prozessobjekte darzustellen.

5. Operator-System nach Anspruch 4, **dadurch gekennzeichnet, dass** das Operator-System (2, 4) ferner dazu ausgebildet ist, für den Fall, dass das dargestellte Blocksymbol (27, 28) der jeweiligen die Meldung erzeugenden Prozessobjekte durch den Operator selektiert wird, das zu diesem Blocksymbol (27, 28) gehörige Faceplate zum Bedienen des Prozessobjektes zu öffnen und nach der Bedienung das Faceplate und das Blocksymbol (27, 28) auszublenden.

6. Operator-System nach Anspruch 5, **dadurch gekennzeichnet, dass** das Operator-System (4) dazu ausgebildet ist, zusätzlich zu den dargestellten Blocksymbolen weitere Symbole (33) darzustellen, die auf ausgeblendete Blocksymbole (27, 28) hinweisen.

## Claims

1. Method for operating and observing a technical plant to be controlled, wherein
- access authorisations are stored in an operator server (2) of the operator system (2, 4) describing which process objects an operator who is logged on to that operator system (2, 4) is allowed to have read and/or write access to,
- a process map (9) having process map modules (10, 11) belonging to the process objects is stored in the operator server (2),
- block symbols (24 to 31), belonging to the process objects, of plant schematics, and also faceplates belonging to the process objects, are stored in the operator server (2),
- a node (7) which can be selected by an operator is entered in an equipment hierarchy (6) for the respective plant schematic for the purpose of opening the respective plant schematic for display on an operator client (4) of the operator system (2, 4),
- automation modules (12, 13) belonging to the process objects are stored in an automation device (3), wherein the automation modules transmit messages to the operator server (2) at runtime of the automation device (3),
**characterised in that** in the event that messages are transmitted to the operator server (2),
- a determination is made on the basis of the messages as to which of the process objects are generating messages,
- a determination is made on the basis of the stored access authorisations as to whether the operator who is logged on to the operator system (2, 4) is authorised to access said process objects generating messages,
- a path name (19, 20), describing the path of the process object generating a message in the equipment hierarchy (6) in each case, is read out in the respective process map modules (10, 11), and
- in the event that the operator who is logged on is authorised to operate the process objects generating messages, and in the event that a message node (21, 22) in the equipment hierarchy (6) is selected by the operator who is logged on, the block symbols of the process objects generating the message are displayed.

2. Method according to claim 1, **characterised in that** in the event that the displayed block symbol (27, 28) of the respective process objects generating a message is selected by the operator, the faceplate belonging to that block symbol is opened for the purpose of operating the process object, wherein the faceplate and the block symbol (27, 28) is removed after operation.

3. Method according to claim 2, **characterised in that** further symbols (33) which point to removed block symbols (27, 28) are displayed additionally to the displayed block symbols.

4. Operator system for a process control system, wherein
- access authorisations are stored in an operator server (2) of the operator system (2, 4) describing which process objects an operator who is logged on to that operator system (2, 4) is allowed to have read and/or write access to,
- a process map (9) having process map modules (10, 11) belonging to the process objects is stored in the operator server (2),
- block symbols (24 to 31), belonging to the process objects, of plant schematics, and also faceplates belonging to the process objects, are stored in the operator server (2),
- a node (7) which can be selected by an operator is entered in an equipment hierarchy (6) for the respective plant schematic for the purpose of opening the respective plant schematic for display on an operator client (4) of the operator system (2, 4),
- the operator server is realised to receive, from an automation device (3) in which automation modules (12, 13) belonging to the process objects are stored, messages from the automation modules (12, 13) at runtime of the automation device (3),
**characterised in that** the operator system (4) is realised, in the event that messages are received by the operator server (2)
- to make a determination on the basis of the messages as to which of the respective process objects are generating a message,
- to make a determination on the basis of the stored access authorisations as to whether the operator who is logged on to the operator system (2, 4) is authorised to access said process objects generating messages,
- to read out a path name (19, 20), describing the path of the process object generating a message in the equipment hierarchy (6) in each case, in the respective process map modules (10, 11),
- in the event that the operator who is logged on is authorised to operate the process objects generating the message, and in the event that the operator who is logged on selects a message node (21, 22) in the equipment hierarchy (6), to display the block symbols of the process objects generating the message.

5. Operator system according to claim 4, **characterised in that** the operator system (2, 4) is further realised, in the event that the displayed block symbol (27, 28) of the respective process objects generating the message is selected by the operator, to open the faceplate belonging to that block symbol (27, 28) for the purpose of operating the process object and to remove the faceplate and the block symbol (27, 28) after operation.

6. Operator system according to claim 5, **characterised in that** the operator system (4) is realised to display further symbols (33) which point to removed block symbols (27, 28) additionally to the displayed block symbols.

## Revendications

1. Procédé de conduite et de contrôle d'une installation technique à commander, dans lequel
- dans un serveur (2) d'opérateur du système (2, 4) d'opérateur, on mémorise des autorisations d'accès, qui décrivent les objets de processus auxquels un opérateur, déclaré sur ce système (2, 4) d'opérateur, peut accéder en lecture et/ou en écriture,
- on mémorise, dans le serveur (2) d'opérateur, une reproduction (9) de processus, qui a des modules (10, 11) de reproduction de processus appartenant aux objets de processus,
- on mémorise, dans le serveur (2) d'opérateur, des symboles (24 à 31) bloc appartenant aux objets de processus d'images d'installation, ainsi que des faceplates appartenant aux objets de processus,
- pour l'ouverture de l'image d'installation respective pour la représentation sur un client (4) d'opérateur du système (2, 4) d'opérateur, on enregistre, dans une hiérarchie (6) d'équipement de l'image d'installation respective, des nœuds (7) pouvant être sélectionnés par un opérateur,
- dans un appareil (3) d'automatisation, on mémorise des modules (12, 13) d'automatisation appartenant aux objets de processus, dans lequel, dans le temps de marche de l'appareil (3) d'automatisation, les modules d'automatisation transmettent des messages au serveur (2) d'opérateur,
**caractérisé en ce que**, dans le cas où des messages sont transmis au serveur (2) d'opérateur,
- on détermine, à l'aide des messages, ceux des objets de processus, qui produisent des messages,
- à l'aide des autorisations d'accès mises en mémoire, on détermine si l'opérateur, déclaré sur le système (2, 4) d'opérateur, est autorisé à accéder à ces objets de processus produisant des messages,
- dans les modules (10, 11) respectifs de reproduction de processus, on lit une indication (19, 20) de trajet, qui décrit, respectivement, le trajet de l'objet de processus produisant un message dans la hiérarchie (6) d'équipement, et
- dans le cas où l'opérateur déclaré est autorisé à conduire les objets de processus produisant des messages et dans le cas où un nœud (21, 22) de déclaration dans la hiérarchie (6) d'équipement est sélectionné par l'opérateur déclaré, on représente les symboles bloc des objets de processus produisant le message.

2. Procédé suivant la revendication 1, **caractérisé en ce que**, dans le cas où le symbole (27, 28) bloc représenté des objets de processus produisant, respectivement, un message est sélectionnés par l'opérateur, on ouvre, pour conduire l'objet de processus, la faceplate appartenant à ce symbole bloc, dans lequel, après la conduite, on supprime la faceplate et le symbole (27, 28) bloc.

3. Procédé suivant la revendication 2, **caractérisé en ce que** l'on représente, en plus des symboles bloc représentés, d'autres symboles (33), qui montrent les symboles (27, 28) bloc supprimés.

4. Système d'opérateur d'un système de conduite de processus, dans lequel
- dans un serveur (2) d'opérateur du système (2, 4) d'opérateur, sont mémorisées des autorisations d'accès, qui décrivent les objets de processus auxquels un opérateur, déclaré sur ce système (2, 4) d'opérateur, peut accéder en lecture et/ou en écriture,
- dans le serveur (2) d'opérateur est mise en mémoire une reproduction (9) de processus, qui a des modules (10, 11) de reproduction de processus appartenant aux objets de processus,
- dans le serveur (2) d'opérateur sont mis en mémoire des symboles (24 à 31) bloc appartenant aux objets de processus d'image d'installation, ainsi que des faceplates appartenant aux objets de processus,
- pour l'ouverture de l'image d'installation respective, pour la représentation sur un client (4) d'opérateur du système (2, 4) d'opérateur, un nœud (7), pouvant être sélectionné par un opérateur, est enregistré dans une hiérarchie (6) d'équipement de l'image d'installation respective,
- le serveur d'opérateur est constitué pour recevoir d'un appareil d'automatisation, dans lequel sont mis en mémoire des modules (12, 13) d'automatisation appartenant aux objets de processus, dans le temps de marche de l'appareil (3) d'automatisation, des messages des modules (12, 13) d'automatisation,
**caractérisé en ce que** le système (4) d'opérateur est constitué, dans le cas où des messages sont reçus par le serveur (2) d'opérateur,
- pour déterminer, à l'aide des messages, ceux des objets de processus qui produisent un message,
- pour déterminer, à l'aide des autorisations d'accès mises en mémoire, si l'opérateur, déclaré sur le système (2, 4) d'opérateur, est autorisé à accéder à ces objets de processus produisant des messages,
- pour lire, dans les modules (10, 11) de reproduction de processus respectifs, une indication (19, 20) de trajet, qui décrit le trajet de l'objet de processus produisant un message dans la hiérarchie (6) d'équipement,
- pour, dans le cas où l'opérateur déclaré est autorisé, conduire des objets de processus produisant des messages et, dans le cas où l'opérateur déclaré sélectionne un nœud (21, 22) de déclaration dans la hiérarchie (6) d'équipement, représenter les symboles bloc des objets de processus produisant le message.

5. Système d'opérateur suivant la revendication 4, **caractérisé en ce que** le système (2, 4) d'opérateur est constitué, en outre, pour, dans le cas où le symbole (27, 28) bloc représenté des objets de processus respectifs produisant le message est sélectionné par l'opérateur, ouvrir la faceplate appartenant à ce symbole (27, 28) bloc pour conduire l'objet de processus et, après la conduite, supprimer la faceplate et le symbole (27, 28) bloc.

6. Système d'opérateur suivant la revendication 5, **caractérisé en ce que** le système (4) d'opérateur est constitué pour représenter, en plus des systèmes bloc représentés, d'autres symboles (33), qui montrent des symboles (27, 28) bloc supprimés.
